# EUROPEAN PATENT APPLICATION

(11) **EP 0 571 132 A1**
(43) Date of publication of application: **24.11.1993**
(21) Application number: 93303695.6
(22) Date of filing: 13.05.1993
(51) Int. Cl.: H04J 14/02, G02B 6/34

(54) **Optical tunable receiver**

(30) Priority: 22.05.1992 US 887251
(71) Applicant: AT&T Corp., New York, NY 10013-2412 (US)
(72) Inventor: Kaminow, Ivan P., Holmdel, New Jersey 07733 (US)
(74) Representative: Watts, Christopher Malcolm Kelway, Dr.

(57) **Abstract**

This invention relates to a fast acting optical tunable receiver for demultiplexing and extracting packets from a wavelength division multiplexed signal. A wavelength separator demultiplexes a received wavelength division multiplexed signal into signals of different wavelengths. Packets on the individual signals of different wavelengths are detected by an array of optical detectors which generate electrical signals in response to detected packets. Fast acting electronic switches such as FETs are activated by a control means to select one of the optical detectors to pass a generated electrical signal representative of a packet to an output port at any one instant or epoch.

## Description

### Technical Field

This invention relates to optical interconnect apparatus which is capable of optical switching functions. More specifically, this invention relates to a fast acting optical tunable receiver for extracting and assembling packets from the various wavelength channels of a wavelength division multiplexed signal for routing to an output port.

### Background of the Invention

Lightwave technology is well established for long haul and point-to-point applications. However, efforts are currently being expended on ways to extend it to multiple access computer networks and to the distribution plant to permit many users at data rates of about 1Gb/s to be interconnected.

Generally, it can be said that there are two methods of utilizing the optical frequency spectrum for providing communication channels. In one method, fixed wavelengths are associated with given channels where a channel is defined as an input/output connection. Typical networks for achieving fixed-multi-wavelength routing are star or tree networks. A review of fixed-wavelength multichannel technologies and applications can be found in S.S. Wagner et al., "WDM Applications in Broadband Telecommunication Networks", IEEE Communications Magazine, p. 22, March 1989.

In a second method, a connection is established via a dynamic allocation of frequencies by tuning either transmitters or receivers to select frequencies for the duration of the connection. With this method a frequency may be associated with a unique physical address at the input or output. A review of this method, and in particular non-coherent, frequency-tunable filter technologies is described in H. Kobrinski et al., "Wavelength-Tunable Optical Filters: Applications and Technologies", IEEE Communications Magazine, pp. 53-61, October, 1989.

Within the second method, an application which needs to be addressed is high-speed circuit and packet switching systems in the optical domain.

It is an object of this invention to provide a high speed tunable receiver for extracting packets from wavelength division multiplexed channels and switching the extracted packets to an output port..

### Summary of the Invention

This object is achieved by first demultiplexing a received wavelength division multiplex spectrum of signals or channels where each channel contains a stream of packets. The various channels are then detected by an array of photodetectors which convert the received optical packets into electrical signals. Accessing means under the operation of a controller means enables specific ones of the photodetectors to pass an electrical signal representative of a detected packet to an output port. The apparatus for demultiplexing the received signal has at least one array of waveguides having a focal point located in a predetermined position with respect to the free space region of an optical star coupler so as to reduce phase errors caused by mutual coupling between waveguides in the apparatus and an array of waveguides of unequal length that functions as a wavelength sensitive grating. The accessing means which selectively enables the photodetectors are fast acting electronic switches.

### Brief Description of the Drawing

FIG. 1 illustrates a tunable fiber Fabry-Perot filter in combination with a star coupler for use as a demultiplexer and detector for a wavelength division multiplexed signal;
FIG. 2 illustrates in block diagram form, a fast tunable optical receiver for demultiplexing a received wavelength division multiplexed spectrum of packets into signals of separate wavelengths and selectively switching the packets of separate wavelengths to an output terminal;
FIG. 3 illustrates a wavelength separating means for demultiplexing wavelength division multiplexed signals;
FIG. 4 depicts one-half of one of the waveguides in the optical grating illustrated in FIG. 3;
FIG. 5 is a schematic of a switching means for selectively detecting and converting received optical signals into electrical signals; and
FIG. 6 illustrates a fast acting optical wavelength division multiplexed switch with tunable receivers for demultiplexing a received wavelength division multiplexed spectrum of packets into its individual carrier signals of separate wavelengths and then selectively switching an electrical signal of a packet of a received optical channel to an output receiver terminal.

### Detailed Description

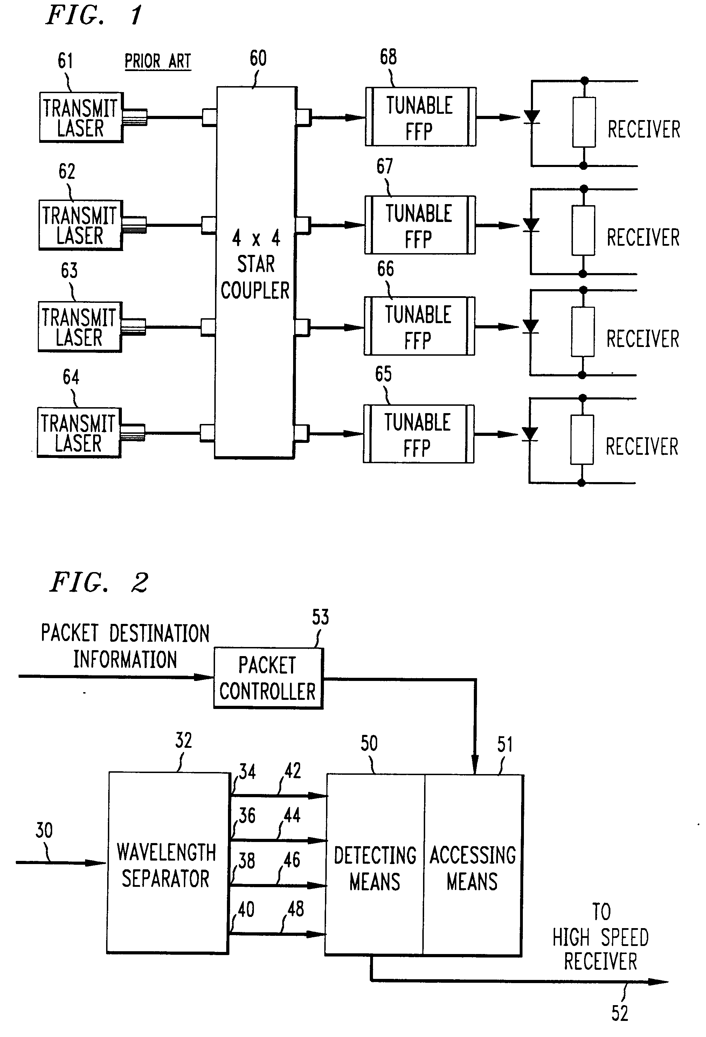

Referring to FIG. 1, there is illustrated a prior art arrangement which includes a star coupler and a tunable fiber Fabry-Perot (FFP) filter for use as a wavelength division multiplexed (WDM) demodulator. Four optical input signals from four transmit lasers 61, 62, 63, 64 equally spaced in wavelength or optical frequency are coupled through a four by four (4x4) terminal star coupler 60 to four tunable fiber Fabry-Perot filters 65, 66, 67, 68. A channel is selected by tuning the FFP filters to the desired channel frequency. In this embodiment, the speed of changing the FFP filter from one optical frequency or wavelength to another frequency is limited by the speed of the piezoelectric transducer that tunes the FFP. It has been found that the speed of tuning the FFP filter is too slow for packet switching applications.

FIG. 2 illustrates, in block diagram form, a fast tunable optical receiver in accordance with the principle of the invention which can be used to rapidly demultiplex a wavelength division multiplexed (WDM) signal and extract packets from the various wavelength signals. An optical WDM signal of, for example, many wavelengths or channels where each wavelength can carry information in the form of packets is applied, via an optical fiber 30, to a wavelength separator 32. Wavelength separator 32 separates each wavelength or channel of the input WDM spectrum from all of the other wavelengths, and each individual wavelength appears at a discrete output port 34, 36, 38, 40 of the separator 32. Optical fibers 42, 44, 46, 48 couple the individual optical wavelengths at the output ports of the channel separator 32 to detecting means 50 which includes individual photodetectors of an array of photodetectors. The photodetectors are fast acting optical to electrical means which converts detected optical signals into electrical signals. Accessing means 51, which includes an array of electronic switches such as an FET transistor array, is connected to selectively enable the photodetectors to access the separate wavelengths. In operation, at any one instant or epoch, only one photodetector is conditioned to detect and pass an electrical pulse signal to the output port 52. A packet controller 53, which knows the packet destinations, generates control signals which are used by the accessing means 51 to determine the photodetector array configuration for each time interval or epoch.

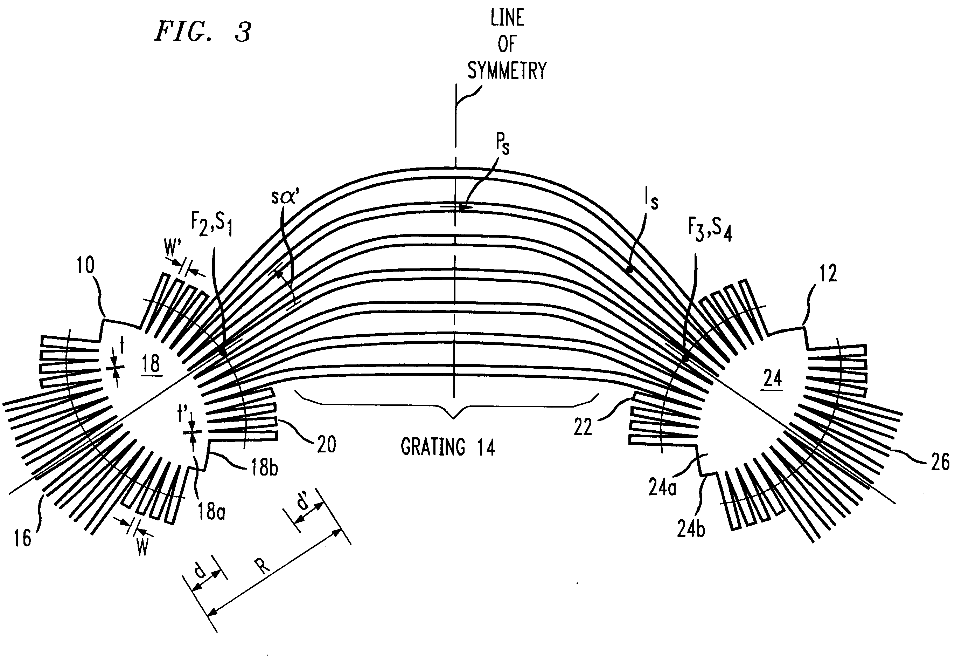

Referring to FIG. 3, there is illustrated a wavelength separator 32 which can include a first star coupler 10 connected to 'an array of input waveguides, a second star 12 coupler connected to an array of output waveguides, and an array of connecting waveguides forming a substantially symmetrical optical diffraction grating 14 interposed between the first and second star couplers.

FIG. 3 shows an array 16 of N input waveguides radially directed from N input ports toward a focal point F2. Each of the input waveguides has a predetermined width W and is angularly displaced from its adjacent waveguides by an angle α.

The star coupler 10 comprises a dielectric slab 18 which forms a free space region having two curved, preferably circular, boundaries 18a and 18b. The input waveguides in the array 16 are connected to the free space region 18 in a substantially uniform fashion along boundary 18a. As indicated in FIG. 3, each of those waveguides is separated from its neighbors by a distance t along the boundary 18a.

An array 20 of M output waveguides is radially directed toward a focal point F1. Each of the waveguides in the array 20 has a width W' and is separated from adjacent waveguides in the array 20 by an angular spacing α'. The output waveguides in the array 20 are connected to the free space region 18 in a substantially uniform fashion along boundary 18b. Each of the output waveguides is separated from its neighbors at the boundary 18b by a distance t', as shown in FIG. 3.

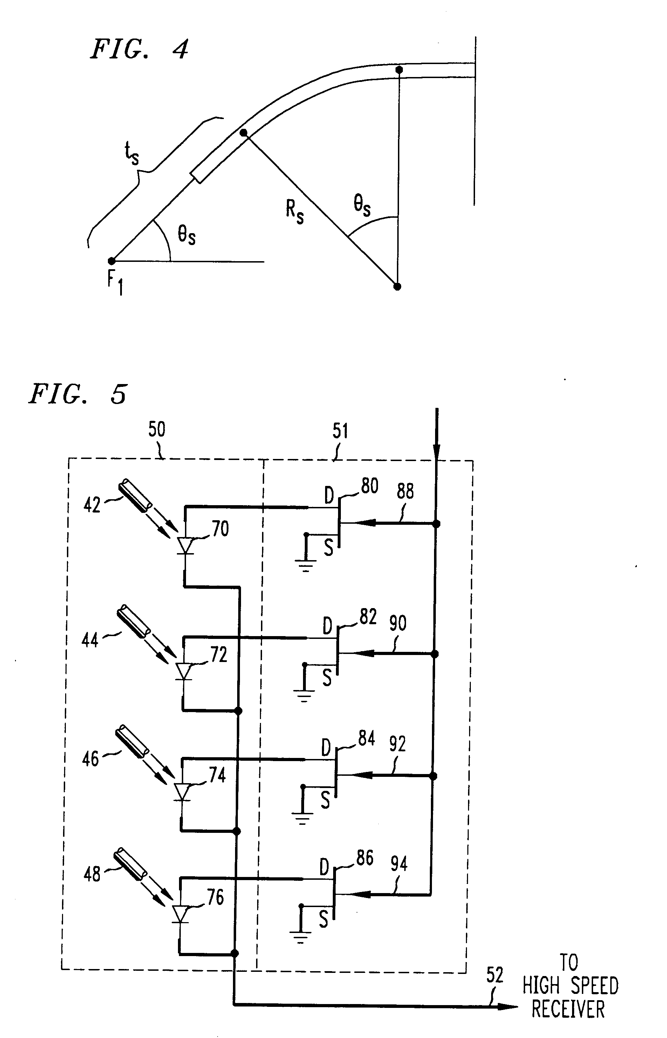

The M waveguides of the grating 14 are a symmetric arrangement of waveguides each having lengths ℓ_{S}, where s is referenced to the central waveguide in the grating. As shown in FIG. 4, each half of the grating 14 comprises preferably three sections, respectively composed of radial, circular, and equispaced parallel waveguides.

Each of the output waveguides in the array 20 is connected to the input of a waveguide in the grating 14. The length of each waveguide in the grating differs from the lengths of all the other waveguides in the grating so that in effect predetermined and different phase shifts are applied to optical signals propagating into the waveguides of the grating from the star coupler 10 because of the different path lengths over which the signals in the grating must travel in reaching the output of the grating. The outputs of the waveguides in the grating 14 thus have different phases, which are functions of the lengths of the waveguides and the wavelength.

The outputs of the waveguides in the grating 14 are connected to another array 22 of M input waveguides which are radially directed toward a focal point F3. The array 22 connects the output of the grating 14 to the input of the second star coupler 12. Like star coupler 10, star coupler 12 comprises a slab of dielectric material 24 forming a free space region having two curved, preferably circular, boundaries 24a and 24b. The array 22 of input waveguides is connected to the free space region in a substantially uniform distribution along boundary 24a.

An array 26 of N output waveguides are radially directed from N output ports toward a focal point F3. The output waveguides in the array 26 are connected to the free space region 24 in a substantially uniform distribution along the boundary 24b.

Phase errors caused by mutual coupling between neighboring waveguides in the arrays 16, 20, 22, and 26 cause increased crosstalk and reduced efficiency of power transfer in a device such as the device of FIG. 3. Accordingly, the focal points are located in the specific locations to minimize such phase errors. Specifically, focal point F1 is located at the phase center S2 of array 16, F2 is located at the phase center S1 of array 20, F3 is located at the phase center S4 of array 22, and F4 is located at the phase center S3 of array 26.

A phase center for an array of waveguides such as those arrays shown in FIG.3 may be considered to be the center of a circle which most closely approximates a locus of points of equal phase for optical wavefronts emitted by the array when the array is excited from a particular input waveguide. In arrays such as those of FIG. 3 having a significant degree of mutual coupling between waveguides, the phase center generally is located outside the free space region a distance d away from the boundary of the free space region. The location of the phase center of an array of radially directed waveguides may be determined using the well known propagating beam method of computing the amplitudes and phases of radiation flowing from waveguides for any given excitation as a function of distance from the waveguides. Preferably, it is assumed that a central waveguide of one of the arrays is excited in the apparatus in FIG. 3. Assuming input excitation is applied to the central waveguide, namely, the waveguide directed through the focal point of the other array of waveguides connected to the same star coupler, the distance d is selected so as to minimize the variation in computed phase along some reference circle centered on that focal point. Various strategies may be adopted regarding this minimization. For example, d may be selected so as to reduce to zero as closely as possible the phase difference of the central waveguide and its two adjacent waveguides. Alternatively, one can select d so that the phase difference between the central and marginal waveguides is minimized. This alternative can be shown to minimize in general the peak value of the phase difference in the entire array.

Once d has been selected in this fashion, there still may be unacceptable residual phase errors across the array of waveguides. These may be reduced by appropriately selecting the length ℓ_{S} of the arms of the grating, which results in a grating having a nonconstant length difference ℓ_{S} - ℓ_{S-1} throughout the grating.

The apparatus of FIG. 3 can be used as a wavelength separator, a multiplexer, or a demultiplexer. In the embodiment here disclosed, the apparatus of FIG.3 is used as a wavelength separator or demultiplexer. The transmission coefficient of the apparatus of FIG. 3 is essentially a periodic function of input wavelength and, in a particular period, it has a single peak of transmission close to unity, produced from a particular input port to a particular output port. If the input and output waveguides are spaced arbitrarily, the apparatus of FIG. 3 is in general characterized in each period by N² distinct wavelengths of maximum transmission, since N² is the total number of transmission coefficients corresponding to the various input and output ports. The differences between these wavelengths are determined by the spacing of the input and output waveguides. It is important, for most applications, to choose uniform spacing, so as to cause the above N² wavelengths to essentially coalesce into N wavelengths λ₁ ...,λ_{N} of maximum transmission in a particular period. In the following, the device will be assumed to be arranged in this configuration.

If optical input power comprising a plurality of appropriate wavelengths λ₁,λ₂, ...λ_{N} of maximum transmission is introduced simultaneously in one of the input waveguides, each of the wavelengths spreads in the free space region of star coupler 10. Portions of the optical power are transmitted through the M waveguides of the grating 14 which are then combined in the free space region of star coupler 12. Optical power of each wavelength is concentrated at the inputs of different output waveguides. Each of the wavelengths of an optical input spectrum directed to a single input port is output by the device in a different output port. The device, thus, acts as a wavelength separator or demultiplexer of the plurality wavelengths appearing on one of the input waveguides. The order in which wavelengths appear on the output waveguides is independent of the input waveguide. However, the sequence of output wavelengths is shifted as the input waveguide is shifted. The sequence thus can be different when the input wavelengths are directed to a different input waveguide. The device of FIG. 3 is an N x N demultiplexer having N input and N output ports.

Referring to FIG. 5, there is illustrated a schematic of the detecting means 50, and the accessing means 51 of FIG. 2 for selectively detecting optical signals from the wavelength separator 32 via optical fibers 42, 44, 46, 48 and converting said detected optical signals into electrical signals. The optical detectors used to detect the optical signal from the output ports of the wavelength separator can be photoconductors, avalanche photodiodes, metal-semiconductor-metal photodetectors or p-i-n photodiodes. In the embodiment of FIG. 5, the optical detectors are p-i-n detectors. The cathodes of p-i-n detectors 70, 72, 74, 76 are connected to a common output port 52. However, if desired, the cathodes of the detectors can be connected to individual output ports. The anodes of the detectors are connected to the drain contacts of FETs, 80, 82, 84, 86, such as, for example, Fujitsu model FSX03X/002, and the source contacts of the FETs are connected to a common ground terminal. The gate contacts of the FETs are connected to receive switch control voltages from controller 53 via terminals 88, 90, 92, 94. The switch control voltages provided by packet controller 53 determine which one of the photodetectors passes the electrical equivalent of a detected optical signal to the output port 53.

One such arrangement of p-i-n photodetectors selectively controlled by control potentials applied to FETs which achieved operation at bandwidth as high as 5 GHz with on/off isolation of the detectors at 70dB is described in IEEE Photonics Technology Letters, Vol. 3, No. 10, Oct. 1991.

Today's lasers, while not perfectly monochromatic, have a narrow-band optical spectrum. Lasers are available with spectra centered at different wavelengths (colors). Optical combiners or wavelength multiplexers are available for mixing or multiplexing these sources into a single multicolor optical signal that can be transmitted along an optical fiber. At the far end, these colors are separated or demultiplexed so that only a single color of light is launched toward an output port. This technique, called wavelength division multiplexing, permits multiple signals at a given rate to be transported on the same glass fiber, thereby reducing the fiber count required to carry a given amount of traffic. Now, if each wavelength is used to transmit information in the form of packets from one station to another station, the sending station converts the address of the receiving station contained in a packet header to the appropriate wavelength of the receiving station.

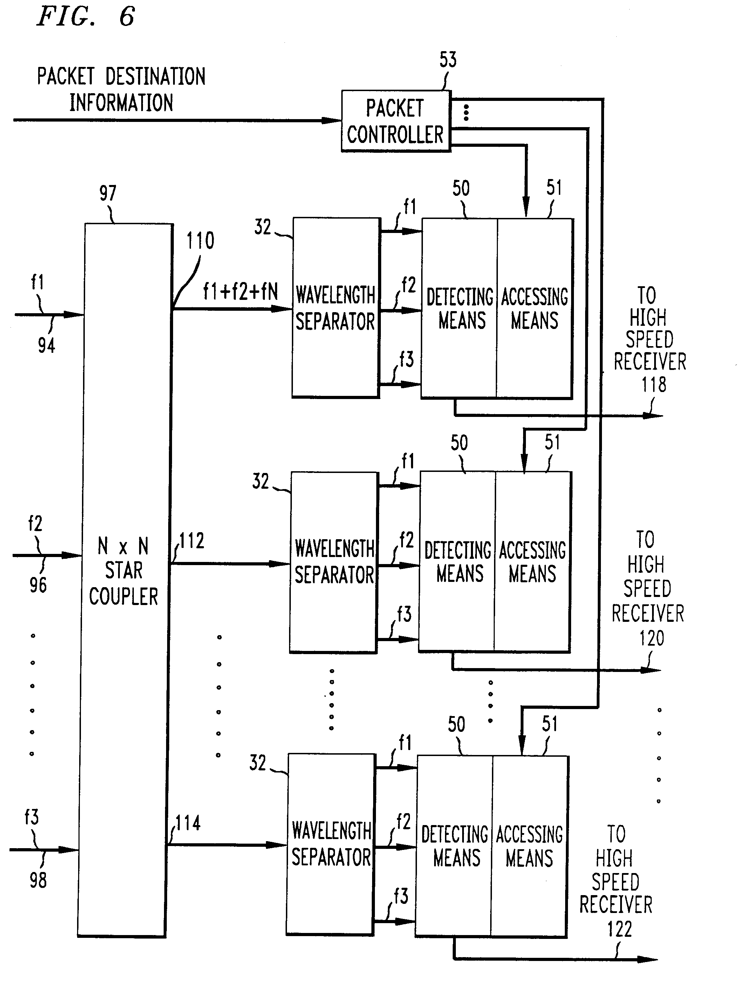

Referring to FIG. 6 there is illustrated a WDM packet switch consisting of a number of input optical fibers 94, 96,... 98, each carrying information in the form of packets on channels of different wavelengths or optical frequencies, f1, f2 ... f3. Each optical fiber 94, 96,...98 is coupled to an input port of an NxN passive optical star coupler 97. The input signal to each input port appears at all of the output ports of the NxN star coupler. Thus, each frequency f1, f2, ... f3 and the packets associated with each frequency appear at each output port 110, 112,... 114 of the star coupler. The wavelengths and their packets at each output port 110, 112, 114 of the star coupler are directed toward the wavelength separator 32 which separates the various wavelength signals from each other. Thus, each of the various wavelengths f1, f2,...f3 appears at separate output terminals of each of the wavelength separators 32 and are directed via optical fibers, toward individual photodetectors of detecting means 50. Switching signals from a packet controller 53 are applied to control terminals of the accessing means 51 to rapidly switch specific photodetectors of the array of photodetectors which detect packets from the various optical wavelength signals and converts the detected packets into electrical currents which pass to output terminals 118, 120, 122. The packet controller 53 reads the header of each packet, determine its destination, and generates the switching signals which detect and route appropriate packets from wavelengths f1, f2...f3 to a common output receiver port. In general, a buffer array may be required to store packets at the input to the NxN star. In principle, the buffering and reading of headers can be accomplished all-optically.

While the invention has been described in conjunction with a specific embodiment (i.e., a packet switch) thereof, it is evident that many alternatives, modifications and variations for applications of the fast tunable receiver function will be apparent to those skilled in the art in light of the foregoing description.

## Claims

1. An optical tunable receiver comprising
wavelength separator means for demultiplexing a received wavelength division multiplexed spectrum of packets into signals of different wavelengths,
detecting means comprising an optical detector array coupled to detect packets of different wavelengths of the demultiplexed optical signals and convert said detected packets into electrical signals, and
control means coupled to said detecting means to condition selected ones of said optical detectors to pass an electrical signal to an output port.

2. An optical tunable receiver comprising
wavelength separator means for demultiplexing a received wavelength division multiplexed spectrum of packets into signals of different wavelengths,
detecting menas comprising an optical detector array coupled to selectively detect and convert packets of different wavelength of the demultiplexed optical signals into electrical signals,
accessing means coupled to control said optical detectors to pass electrical signals generated by said optical detectors in response to a detected optical signal to an output termainl, and
controller means coupled to said accessing means to delective ones of said condition optical detectors to pass an electrical signal to an output port.

3. The optical tunable receiver of claim 2
wherein said optical detectors comprise p-i-n photodiodes.

4. The optical tunable receiver of claim 3
wherein said detecting means comprises an FET.

5. The optical tunable receiver of claim 2
wherein said wavelength separator means for demultiplexing a received wavelength division multiplex spectrum of packets into signals of different wavelengths comprises
a free space region of predetermined geometry;
a first array of waveguides radially directed toward a first focal point located a predetermined distance outside the free space region so as to reduce phase errors caused by mutual coupling between the waveguides in the first array;
a second array of waveguides radially directed toward a second focal point located a predetermined distance outside the free space region so as to reduce phase errors caused by mutual coupling between the waveguides in the second array; and
an optical grating connected to the second array of waveguides and having a plurality of optical waveguides each having a predetermined length which differs from the predetermined lengths of the other waveguides in the grating, the length difference between two adjacent waveguides in the grating not being constant throughout the grating and the lengths of the waveguides in the grating being such that residual phase errors are reduced.

6. The optical tunable receiver of claim 2 wherein said wavelength separator means for demultiplexing a received wavelength division multiplex spectrum of packets into signals of different wavelengths comprises
a plurality of input ports at least one of which receives optical communication signals;
a plurality of output ports at least one of which transmits optical communication signals;
a first plurality of input waveguides radially directed from the plurality of input ports toward a first focal point;
a first star coupler having an input connected to the plurality of input waveguides;
a first plurality of output waveguides radially directed to a second focal point and connected to an output of the first star coupler;
an optical grating comprising a plurality of unequal length waveguides having inputs connected to the first plurality of output waveguides;
a second plurality of input waveguides radially directed to a third focal point and connected to outputs of the optical grating;
a second star coupler having an input connected to an output of the second plurality of input waveguides; and
a second plurality of output waveguides radially directed from the plurality of output ports toward a fourth focal point and connected to an output of the second star coupler;
the first and second focal points being located predetermined distances from the first star coupler and the third and fourth focal points being located predetermined distances from the second star coupler so as to reduce phase errors caused by mutual coupling between the waveguides in the arrays of input and output waveguides.

7. The optical tunable receiver of claim 6 wherein said optical grating comprises
a plurality of optical waveguides each having a predetermined length which differs from the predetermined lengths of the other waveguides in the grating, the length difference between two adjacent waveguides in the grating not being constant throughout the grating and the lengths of the waveguides in the grating being such that residual phase errors are reduced.

8. The optical tunable receiver of claim 2 wherein said wavelength separator means for demultiplexing a received wavelength division multiplex spectrum of packets into signals of different wavelengths comprises
a first plurality of input waveguides radially directed from a plurality of input ports toward a first focal point;
a first star coupler having an input connected to the plurality of input waveguides;
a first plurality of output waveguides radially directed to a second focal point and connected to an output of the first star coupler;
an optical grating comprising a plurality of unequal length waveguides having inputs connected to the first plurality of output waveguides;
a second plurality of input waveguides radially directed to a third focal point and connected to outputs of the optical grating;
a second star coupler having an input connected to an output of the second plurality of input waveguides; and
a second plurality of output waveguides radially directed from a plurality of output ports toward a fourth focal point and connected to an output of the second star coupler;
the first and second focal points being located predetermined distances from the first star coupler and the third fourth focal points being located predetermined distances from the second star coupler.

9. The optical tunable receiver of claim 8 in which the predetermined distances of the focal points from the star couplers are such that phase errors are reduced.

10. The optical tunable receiver of claim 9 in which the predetermined distances of the focal points from the star couplers are such that aberrations caused by mutual coupling between waveguides is reduced.

11. The optical tunable receiver of claim 8 in which the input and output radially directed pluralities of waveguides each define respective phase centers;
the focal points of the input waveguides substantially coincide with the phase centers of the output waveguides; and
the focal points of the output waveguides substantially coincide with the phase centers of the input waveguides.
